# EUROPEAN PATENT APPLICATION

(11) **EP 2 397 736 A1**
(43) Date of publication of application: **21.12.2011**
(21) Application number: 11169662.1
(22) Date of filing: 13.06.2011
(51) Int. Cl.: F16L 3/22, F16L 3/10, H02G 3/32

(54) **Modular conduit retention system**

(30) Priority: 15.06.2010 GB 201009963
(71) Applicant: AIRBUS OPERATIONS LIMITED, Filton Bristol Bristol BS99 7AR (GB)
(72) Inventor: Blanchard, Jack, BRISTOL, BRISTOL BS99 7AR (GB); Routledge, David, BRISTOL, BRISTOL BS99 7AR (GB)
(74) Representative: Butler, Daniel James

(57) **Abstract**

A conduit retention system (400) comprises a base (404) and a plurality of polygonal elements (403) which can snap-fit together, the polygonal elements forming
- a first body defining a conduit receiving formation, the first body having a first mating formation defined on a first side thereof, and a second mating formation defined on a second side thereof, wherein the first and second mating formations are complementary and
- a second body defining a conduit receiving formation, the second body also having mating formation defined thereon, wherein the mating formations of the first and second body are complementary.

## Description

The present invention is concerned with a conduit retention system. In particular the present invention is concerned with a modular conduit retention system for use on the interior of aircraft suitable for routing, e.g. wire harnesses.

Known aircraft wiring harnesses are routed using P-clips. Such P-clips are formed from strips of plastics material which are folded to form a looped portion and a straight portion depending therefrom. The wiring harnesses are passed through the looped portion and the straight portion is attached to the aircraft fuselage via a bolt in order to retain the wiring harness in place.

Although relatively inexpensive, P-clips require a significant amount of space because only a maximum of two clips may be installed in any one position (i.e. with the flat portions overlapping). Therefore it is necessary to install the clips at different points along the length of the wiring harness. This introduces complexity and requires a high number of fixing points along the length of the harness.

In addition P-clips are generally flexible which can result in rubbing between the harness and the clip which is undesirable.

It is desirable to route other types of conduits in aircraft. For example, hydraulic, fuel and even pneumatic lines may need to be routed.

It is an aim of the present invention to provide an improved conduit harness.

According to a first aspect of the invention there is provided a conduit retention system comprising a first body defining a conduit receiving formation, the first body having a first mating formation defined thereon, a second body defining a conduit receiving formation, the second body having a second mating formation defined thereon, wherein the first and second mating formations are complimentary.

By providing two modular bodies which can receive a conduit and are attachable, it is possible to stack these bodies to permit the securing of a number of wire harnesses or other conduits in a single anchoring location.

According to a second aspect of the invention there is provided a conduit retention system comprising a first body defining a conduit receiving formation, the first body having a first mating formation defined on a first side thereof, and a second mating formation defined on a second side thereof, wherein the first and second mating formations are complimentary.

By providing corresponding mounting formations on different sides of a conduit retention system body, a number of such bodies can be attached together in a modular fashion to secure several wire harnesses or other conduits at a single anchoring location.

According to a third aspect of the invention there is provided a conduit retention system comprising a first body defining a conduit receiving formation, the first body comprising a first part and a second part each of which defines a part of the conduit receiving formation, the first part having a first mating formation defined thereon, the second body having a second mating formation defined thereon, wherein the first and second mating formations are complimentary.

By providing two opposing body parts which can secure a conduit therebetween, fixing of the conduit within the harness is made easier.

An example of a conduit retention system will now be described with reference to the accompanying drawings in which:
Figure 1 is a perspective view of a part of a first conduit retention system in accordance with the present invention,
Fig. 2 is a perspective view of the first conduit retention system of Figure 1,
Figure 3 is a perspective view of a second conduit retention system in accordance with the present invention,
Figure 4 is a perspective view of a third conduit retention system in accordance with the present invention,
Figure 5a is a side view of a fourth conduit retention system in accordance with the present invention,
Figure 5b is a section view of the fourth conduit retention system of figure 5a along B-B,
Figure 5c is a section view of the fourth conduit retention system of figure 5a along C-C of figure 5a,
Figure 5d is a perspective view of the fourth conduit retention system of figure 5a,
Figure 5e is a perspective view of the fourth conduit retention system of figure 5a,
Figure 6a is a side view of a part of a fifth conduit retention system in accordance with the present invention,
Figure 6b is a section view of the fifth conduit retention system of Figure 6a along the line B-B,
Figure 6c is a is a perspective view of the fifth conduit retention system of Figure 6,
Figures 7 an 8 are perspective views of the fifth conduit retention system of Figure 6, and
Figure 9 is a perspective view of a sixth conduit retention system in accordance with the present invention.

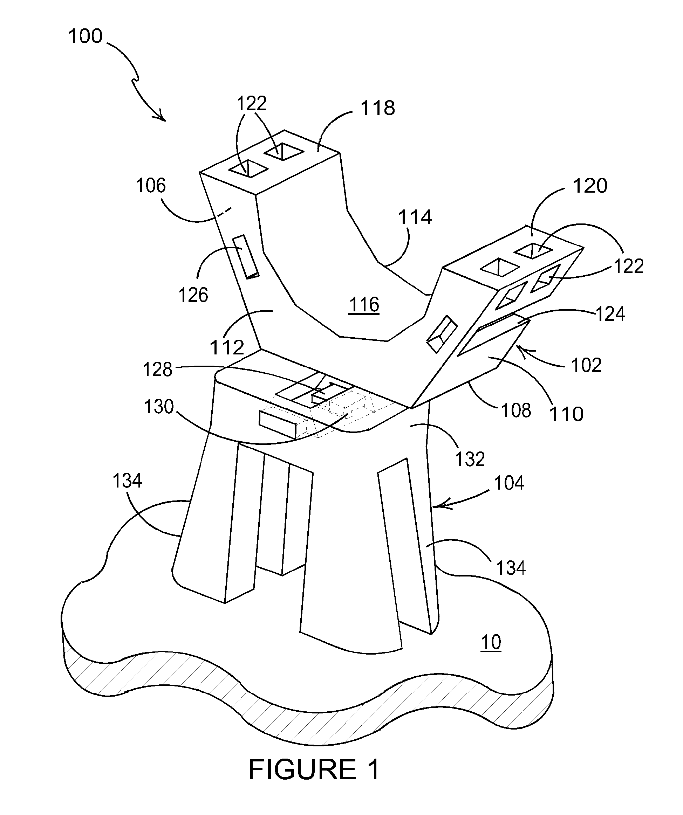

Referring to Figure 1, a conduit retention system assembly 100 comprises a first part 102 and a base part 104. The first part 102 describes a semi-hexagon having a first exterior face 106, a second exterior face 108, and a third exterior face 110. The first part 102 further comprises a front face 112, a rear face 114, and a semi-cylindrical conduit receiving formation 116. The first part 102 further comprises a first mating face 118 and a second mating face 120 parallel to the second external face 108.

Each of the mating faces 118, 120 comprises a pair of square bores 112 which extend from the mating faces 118, 120 to the external faces 106, 110.

Each of the first external face 106 and the third external face 110 define a slot 124 extending from the rear face 114 towards the front face 112. A rectangular bore 126 extends to the front face 112 from the slot 124.

At the second face 108 of the part 102, a resilient finger 128 extends parallel thereto and which comprises a downwardly depending tab 130 at an end thereof.

The base part 104 comprises a top portion 132, and four downwardly depending legs 134. The legs 134 are adhered to an aircraft fuselage part 10 in order to support the conduit retention system 100.

The top portion 132 comprises a slot (not visible) similar to the slot 124 of the first part 102. As shown in Figure 1 the first part 102 can be attached to the base part 104 by pushing the resilient finger 128 and tab 130 into the slot of the top portion 132. It will be understood that the tab 130 engages with a corresponding surface in the top portion 132 of the base part 104 to secure the first part 102 in position; i.e. it is a snap-fit.

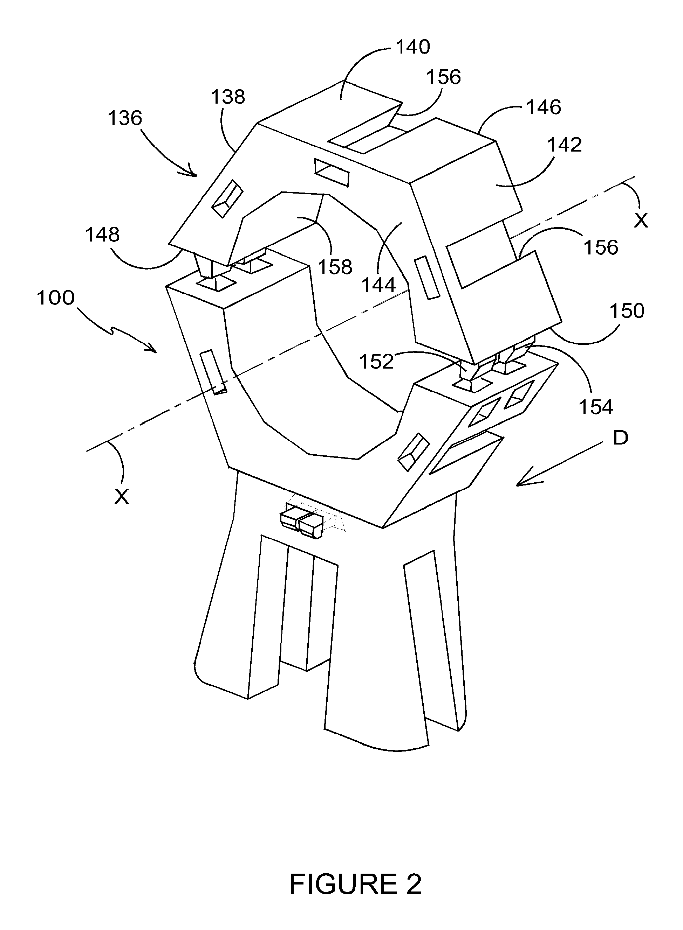

Turning to Figure 2 the conduit retention system 100 is shown to comprise a second part 136. The second part 136 also describes a semi-hexagon having a first external face 138, a second external face 140 and a third external face 142. The second part 136 also has a front face 144, and a rear face 146. A first mating face 148 and a second mating face 150 are provided, each of which comprises a pair of downwardly depending resilient fingers 152 having an extending tab 154. The plurality (pair) of fingers 152 provides redundancy in case of failure.

Each of the external faces 138, 140, 142 defines a slot 156 similar to the slot 124 in the first part 102.

The second part 136 comprises a semi-cylindrical wire receiving formation 158.

In use, a wire harness or other conduit (not shown) is placed within the conduit receiving formation 116 of the first part 102. Once in position the second part 136 is placed over the conduit such that a wire receiving orifice is formed between the conduit receiving formations 116, 158. As the resilient fingers 152 enter the square bores 122, they are deformed until the tabs 154 are able to engage with the faces of the square bores 112 leading on to the external faces 106, 110, at which point the resilient fingers resile to lock the first and second wire harness parts together as a snap-fit formation.

The conduit receiving formations 116, 158 define a main axis X along which the conduit is generally positioned in use. The first and second parts 102, 136 engage in a first direction perpendicular to the axis X. In this way, the conduit can be clamped. The first part 102 is engaged with the base 104 in a direction D (see figure 2) parallel to the axis X. This allows the system to be anchored when it has been clamped around the harness by sliding it along the conduit in a direction parallel to axis X.

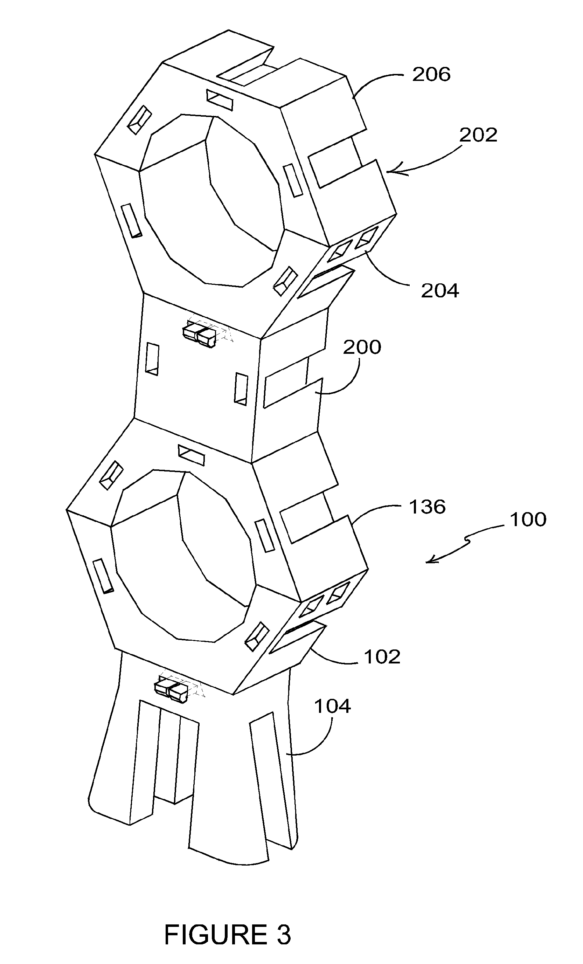

Referring to Figure 3, because of the slots 124, 156 spaced around the conduit retention system 100 further components such as a spacer 200 and a further conduit retention system 202 comprising a further first part 204 and a further second part 206 can be installed thereon.

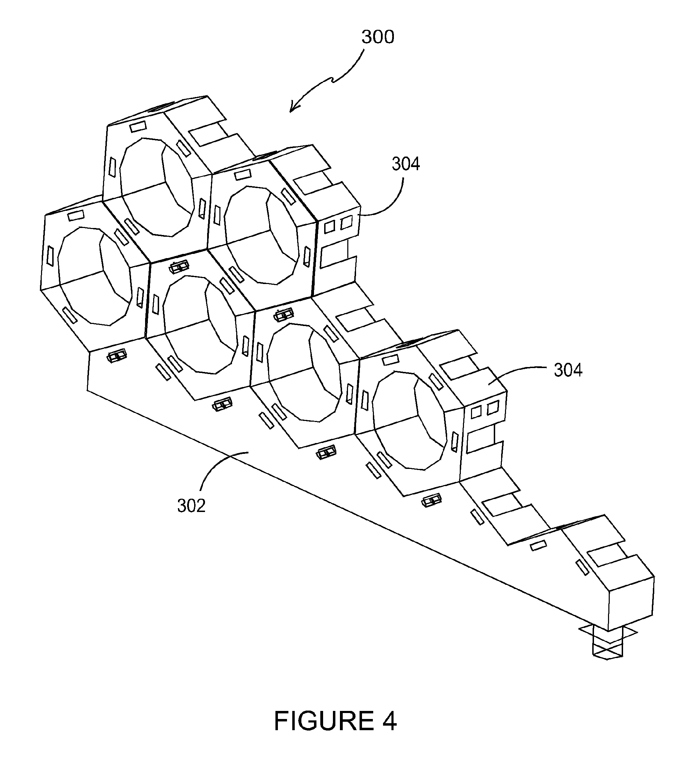

Figure 4 shows a different type of conduit retention system 300 in which a different type of base 302 can receive a plurality of modules 304 which can be stacked together to provide the desired assembly to route conduits.

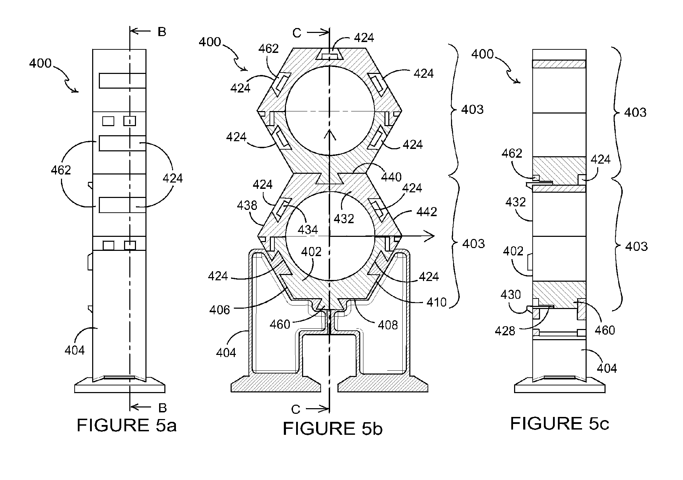

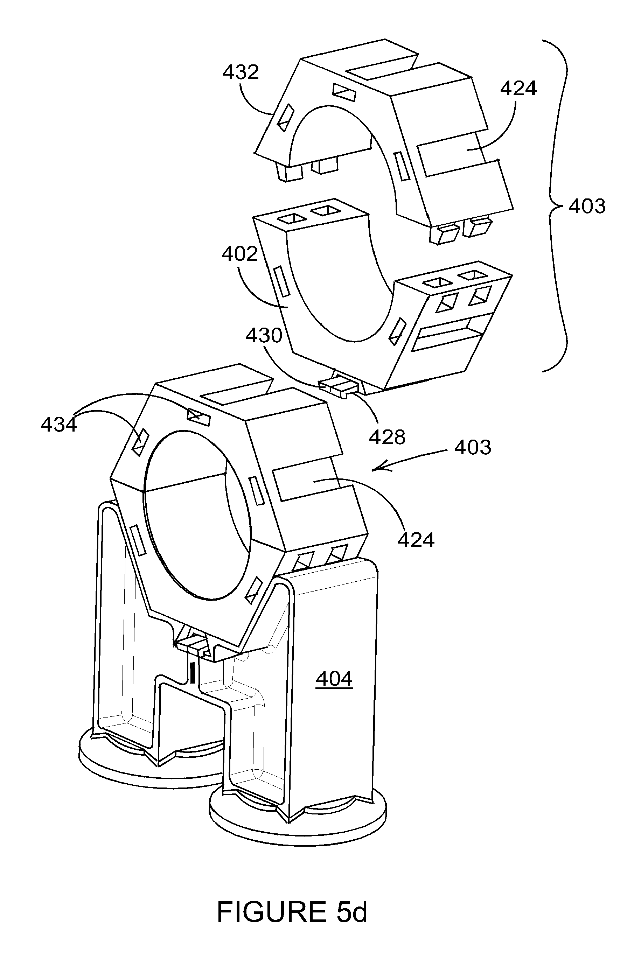

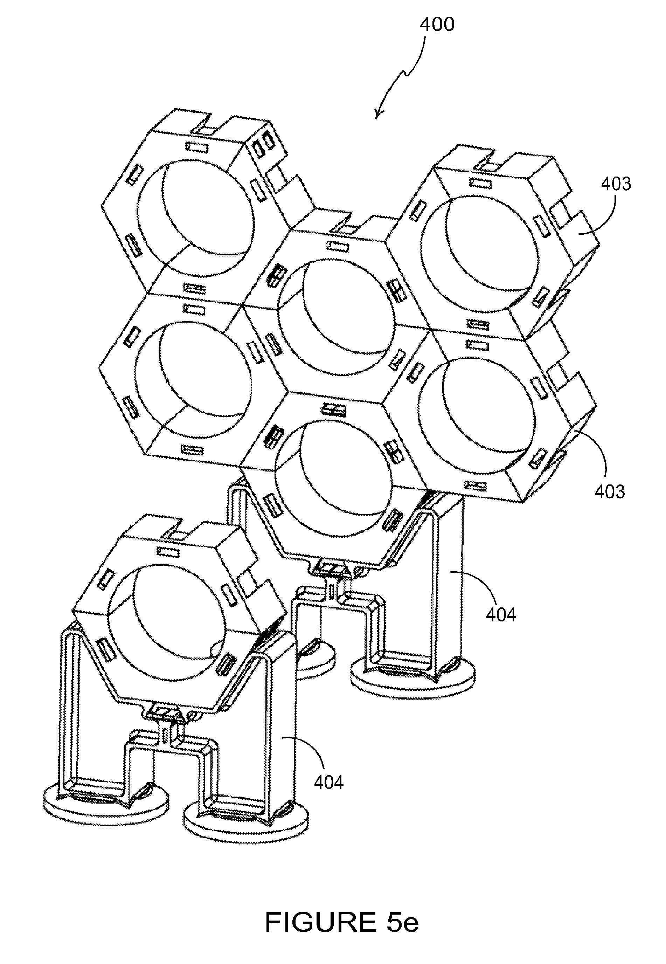

Turning to Figures 5a to 5e, a conduit retention system 400 is shown in which a different base part 404 is shown with a plurality of modules 403 having a first part 402 and a second part 432 stacked together thereon. The retention system 400 is similar to the conduit retention system 100 with reference numerals of similar features, 300 greater. As can be seen, each of the faces 406, 410, 438, 440, 442 defines a slot 424, in the shape of a dovetail. The slots 424 are blind, terminating in an end wall 462 defining a tab receiving sub-slot 434.

The face 408 of the first part 402 comprises a dovetail projection 460. The resilient finger 428 comprising the tab 430 extends from the projection 460. When two components 403 need to be joined, a first part 402 of one component 403 can be joined to a second part 432 of another component 403 by sliding the dovetail projection 460 into the corresponding slot 424 until the tab 430 engages the sub-slot 434 to lock the components 403 in place. The first component 402 is mounted to the base 404 in a similar manner.

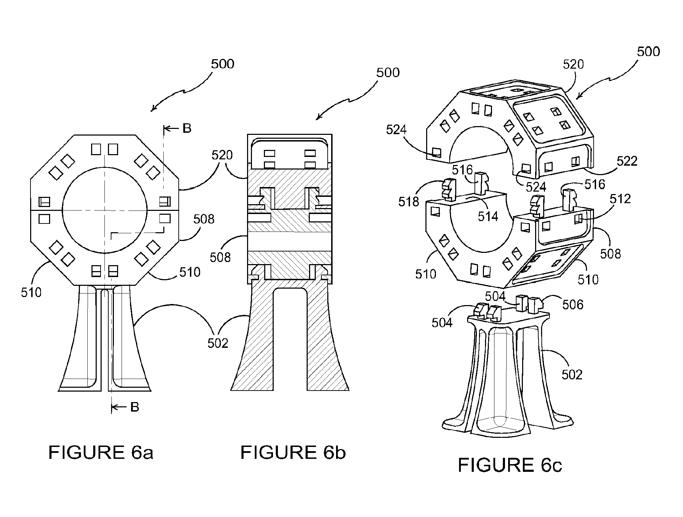

Turning to Figures 6a to 8, an alternative design of a conduit retention system 500 is shown. The conduit retention system 500 comprises a base part 502 having four upstanding resilient fingers 504, each having an outwardly extending tab 506. The base part 502 is otherwise similar to the base part 104. A first part 508 of a the conduit retention system 500 comprises a semi-octagon; each external face 510 of which is recessed and comprises four tab receiving slots.

Two mating faces 514 of the part 508 each define two upwardly extending resilient fingers 516 each comprising a pair of outwardly extending tabs 518.

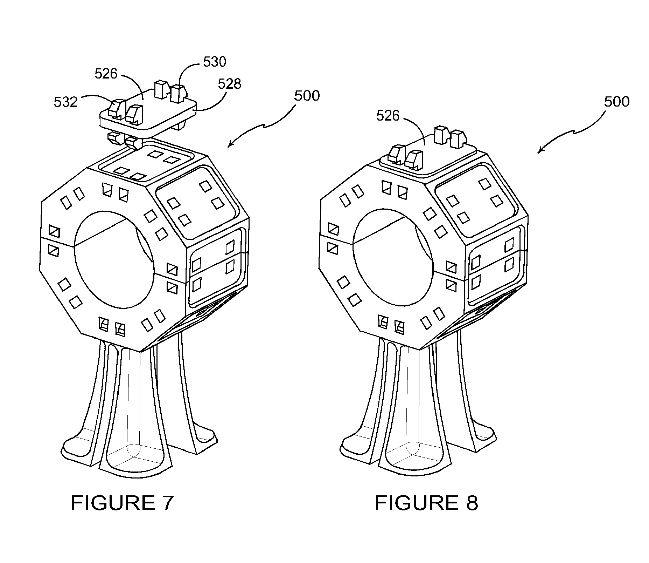

As shown in Figure 7, the assembly 500 has a second part 520 substantially identical to the first part 508, except for the mating faces 522 having slots defined therein for receiving the resilient fingers 516. It will be noted that the second part 520 defines externally facing square bores 524 into which the tabs 518 of the resilient fingers 516 can protrude to snap-fit the components together.

It can be seen that should the second part 520 fully engage with the first part 508, the lower tabs 518 only will engage with the bores 524.

If the two parts fully engage and any of the tabs 518 closest to the mating surfaces 514 fail, the upper tabs 518 provide redundancy to prevent complete release of the upper part 520. It will also be noted that the plurality of fingers 516 provides redundancy.

Turning to Figures 7 and 8 it can clearly be seen that the assembly 500 can also employ connector parts 526 to connect adjacent modules together. Each connector part 526 comprises a flat plate 528 each side of which has four protruding fingers 530 defining tabs 532 for engagement with the upper and lower parts 508, 520.

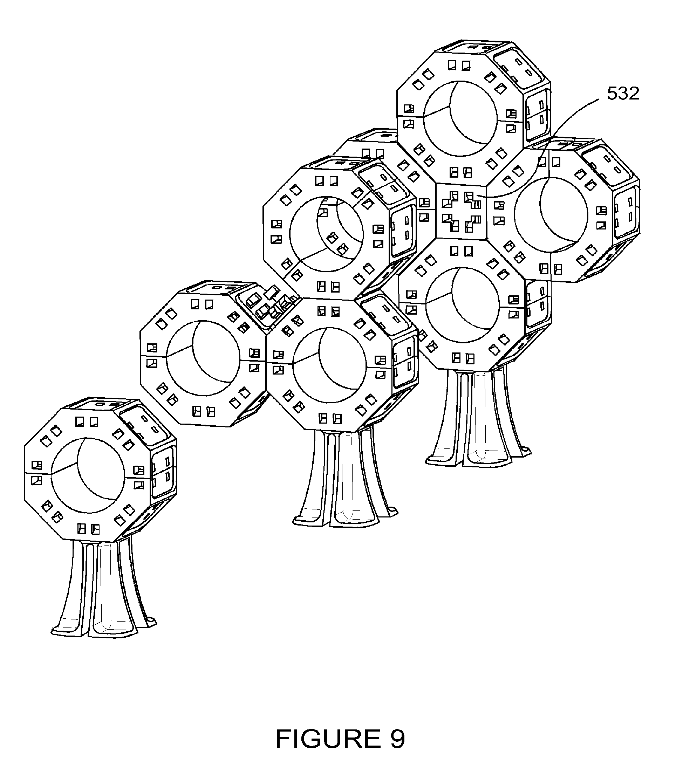

Finally, turning to Figure 9 it can be seen that using spacer elements 532 a number of the octagonal modules can be attached together to provide support for a number of wiring harnesses from the same base part.

It will be understood that variations of the above embodiments fall within the scope of the present invention. For example any polygonal shape that may be used in place of a hexagon or octagon. The inner surface of the co-operating parts does not have to be circular and can be oval or any suitable shape.

In a preferred embodiment the modules comprise a peripheral groove around the centre of the external faces in a plane perpendicular to the main axis of the conduit to receive a cable tie or similar which can secure the two parts in place whilst still permitting attachment to each other as above.

It will be understood that the various clipping arrangements can be designed such that they can only be assembled once and not disassembled without breakage. Therefore reuse of these components (which may lead to failure) can be prevented by making them single use components.

The above system may be used with any type of flexible or stiff conduit - e.g. hydraulic, fuel, coolant or pneumatic lines amongst others.

## Claims

1. An aircraft conduit retention system comprising;
a first body defining a conduit receiving formation, the first body having a first mating formation defined thereon,
a second body defining a conduit receiving formation, the second body having a second mating formation defined thereon,
wherein the first and second mating formations are complimentary.

2. An aircraft conduit retention system comprising;
a first body defining a conduit receiving formation, the first body having a first mating formation defined on a first side thereof, and a second mating formation defined on a second side thereof, wherein the first and second mating formations are complimentary.

3. An aircraft conduit retention system according to claim 2 in which the first and second sides are opposite.

4. An aircraft conduit retention system according to any of claims 1 to 3 in which the mating formations are snap-fit formations.

5. An aircraft conduit retention system according to claim 4 in which the first mating formation comprises a resilient finger having a lip disposed at a first end, and the second mating formation comprises an orifice having an outer periphery, in which the first and second mating formations are engageable by inserting the finger through the orifice to resiliently engage the lip against the outer periphery.

6. An aircraft conduit retention system according to any preceding claim in which the body or bodies define a conduit receiving axis therethrough, and the mating formations are engageable in a direction substantially parallel to the conduit receiving axis.

7. An aircraft conduit retention system according to any preceding claim in which the body or bodies define a polygonal external perimeter.

8. An aircraft conduit retention system according to claim 7 in which the body or bodies define a hexagonal external perimeter

9. An aircraft conduit retention system according to claim 7 in which the body or bodies define an octagonal external perimeter.

10. An aircraft conduit retention system according to any preceding claim in which the conduit receiving formation or formations are a circular bore.

11. An aircraft conduit retention system according to any preceding claim defining a peripheral groove at least partially defined on an outwardly facing surface thereof.

12. An aircraft conduit retention system according to any preceding claim in which the first and second mating formations are inseparably engageable.

13. An aircraft conduit retention system according to any preceding claim in which the body or bodies comprise a first part and a second part engageable to define the wire harness receiving formation.

14. An aircraft conduit retention system according to claim 13 in which the first part and the second part are substantially symmetrical.

15. An aircraft conduit retention system according to claim 13 or 14 in which the first part and the second part and engageable via a snap fit formation.

16. An aircraft conduit retention system according to any of claims 13 to 15 in which the first and second parts are inseparably engageable.

17. An aircraft conduit retention system comprising;
a first body defining a conduit receiving formation, the first body comprising a first part and a second part each of which defines a part of the conduit receiving formation, the first part having a first mating formation defined thereon, the second body having a second mating formation defined thereon, wherein the first and second mating formations are complimentary.

18. An aircraft conduit retention system according to claim 17 in which the mating formations are snap-fit formations.

19. An aircraft conduit retention system according to claim 17 or 18 in which the first mating formation comprises a resilient finger having a lip disposed at a first end, and the second mating formation comprises an orifice having an outer periphery, in which the first and second mating formations are engageable by inserting the finger through the orifice to resiliently engage the lip against the outer periphery.

20. An aircraft conduit retention system according to any of claims 17 to 19 in which the body or bodies define a conduit receiving axis therethrough, and the mating formations are engageable in a direction substantially perpendicular to the conduit receiving axis.

21. An aircraft conduit retention system according to any of claims 17 to 20 in which the first body defines a polygonal external perimeter.

22. An aircraft conduit retention system according to claim 21 in which the body defines a hexagonal external perimeter.

23. An aircraft conduit retention system according to claim 21 in which the body defines an octagonal external perimeter.

24. An aircraft conduit retention system according to any of claims 21 to 23 in which the first and second parts define opposite, substantially symmetrical sides of the polygonal perimeter.

25. An aircraft conduit retention system according to any of claims 17 to 24 defining a peripheral groove at least partially defined on an outwardly facing surface thereof.

26. An aircraft conduit retention system according to any of claims 17 to 25 in which the first and second mating formations are inseparably engageable.

27. An aircraft conduit retention system as described herein with reference to, or in accordance with, the accompanying drawings.
